# EUROPÄISCHE PATENTSCHRIFT

(11) **EP 0 548 702 B1**
(45) Veröffentlichungstag und Bekanntmachung des Hinweises auf die Patenterteilung: **24.04.1996**
(21) Anmeldenummer: 92121108.2
(22) Anmeldetag: 11.12.1992
(51) Int. Cl.: B25D 17/08, B23B 31/00

(54) **Staubkappe für Bohrgeräte**
Dustcap for drilling machines
Bonnet de poussière pour machine à forage

(30) Priorität: 20.12.1991 DE 9115805 U
(43) Veröffentlichungstag der Anmeldung: 30.06.1993
(73) Patentinhaber: ROBERT BOSCH GMBH, D-70442 Stuttgart (DE)
(72) Erfinder: Reibetanz, Wilbert, Dipl.-Ing., W-7022 Leinfelden-Echterdingen (DE); Wanner, Karl, Dr.-Ing., W-7022 Leinfelden-Echterdingen (DE); Baumann, Otto, W-7022 Leinfelden-Echterdingen (DE); Müller, Rolf, Dipl.-Ing., W-7022 Leinfelden-Echterdingen (DE)

(56) Entgegenhaltungen:
- EP-A- 0 456 003
- DE-A- 3 406 482
- DE-A- 3 606 331
- DE-A- 3 637 354

## Beschreibung

Die Erfindung geht aus von einer Staubkappe nach dem Oberbegriff des Anspruchs 1. In der DE 36 37 354 C2 ist ein Bohrgerät bzw. ein Adapter dafür gezeigt, der eine Staubschutzkappe mit einer Doppellippe aufweist. Die dort gezeigten Werkzeughalter sind jedoch nur für Werkzeuge mit einheitlichem Schaftdurchmesser geeignet. Die Doppellippe ist im übrigen so kurz und unflexibel, daß sie sich an andere Schaftdurchmesser nicht anpassen könnte. Gänzlich ungeeignet wäre eine solche Staubschutzkappe für verstellbare Backenfutter, in die Werkzeuge mit sehr unterschiedlichem Schaftdurchmesser einsetzbar sind. Insbesondere, wenn solche Futter in Verbindung mit einem bis in das Schlagwerk hineinreichenden Schlagkörper etwa gemäß der EP-A-456003 Verwendung finden, ist ein wirksamer Schutz vor in das Schlagwerk eindringendem Staub äußerst wichtig.

Die erfindungsgemäße Staubkappe mit den kennzeichnenden Merkmalen des Anspruchs 1 hat demgegenüber den Vorteil, daß sich damit Werkzeugschäfte sehr unterschiedlichen Durchmessers zuverlässig gegenüber der Werkzeugaufnahme abdichten lassen.

Durch die in den abhängigen Ansprüchen aufgeführten Maßnahmen sind vorteilhafte Weiterbildungen und Verbesserungen der im Anspruch 1 angegebenen Staubkappe möglich. Besonders vorteilhaft ist es, wenn mindestens zwei Dichtlippen vorgesehen sind, die axial voneinander beabstandet sind. Damit hat jede der Dichtlippen ausreichend Raum, um sich an unterschiedliche Schaftdurchmesser und -formen anzupassen. Wenn mindestens eine der Dichtlippen einen Innendurchmesser von höchstens 6 bis 8 mm aufweist, so ist sichergestellt, daß auch entsprechend dünne Rundschaftbohrer noch zuverlässig abgedichtet werden. Durch ein oder mehrere in der Staubkappe vorgesehenen Entstaubungsbohrungen kann bereits eingedrungener Staub durch Fliehkraft oder durch Kompression des Entstaubungsraumes wieder entfernt werden. Wenn die vorderste der Dichtlippen bei aus dem Bohrfutterkörper herausragenden Futterbacken an den Futterbacken anliegt, hat dies den Vorteil, daß die Futterbacken sichtbar sind und das Spannen eines Werkzeugs erleichtert wird.

Ein Ausführungsbeispiel der Erfindung ist in der Zeichnung dargestellt und anhand mehrerer Figuren sowie in der nachfolgenden Beschreibung näher erläutert. Figur 1 zeigt ein spezielles Bohrfutter mit Staubkappe, Figur 2 zeigt eine Staubkappe in Einzeldarstellung und die Figuren 3 bis 6 zeigen die auf das Bohrfutter aufgesetzte Staubkappe bei der Abdichtung verschiedener Bohrwerkzeuge bzw. bei verschiedenen Backenstellungen.

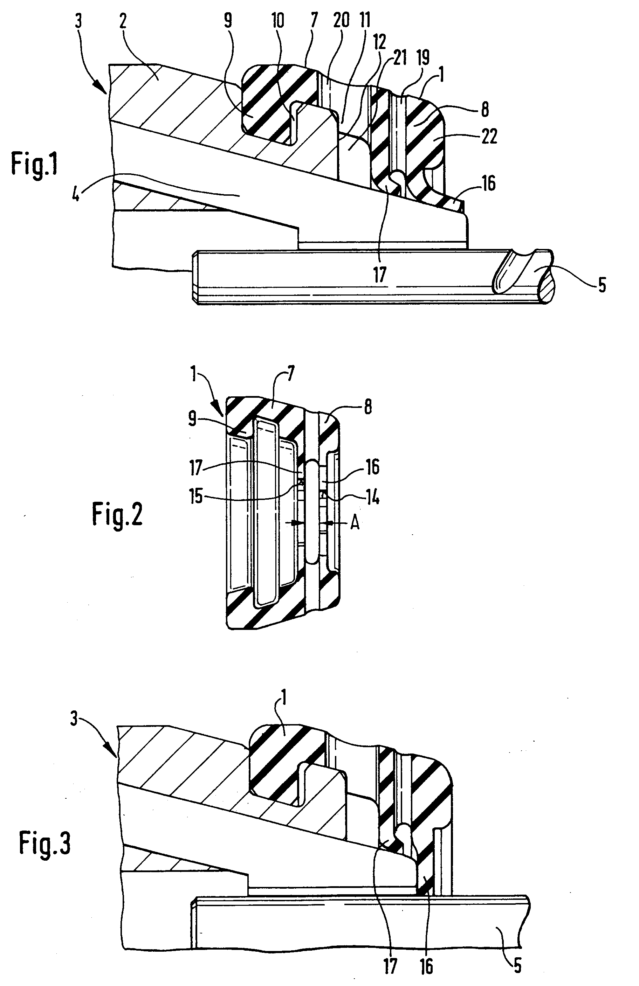

Eine gummielastische, glockenförmige Staubkappe 1 aus Kunststoff oder Gummi ist auf einen Grundkörper 2 eines Werkzeughalters 3 aufgezogen. Der Werkzeughalter ist in Figur 1 als Bohrfutter mit vorzugsweise drei Bohrfutterbacken 4 ausgebildet. In das Backenfutter ist ein Werkzeug 5, insbesondere zum Bohren eingesetzt.

Die glockenförmige Staubkappe 1 hat, wie am besten in Figur 2 sichtbar ist, eine etwa zylindermantelförmige bzw. konische Seitenwand 7 und eine Stirnwand 8. Am der Stirnwand abgewandten Ende der Seitenwand 7 hat die Staubkappe einen nach innen hervorstehenden Kragen 9, der in eine Nut 10 des Werkzeughalters 3 eingreift. Innerhalb der Seitenwand 7 ist ein Bund 11 angeordnet, der an der Stirnseite 12 des Werkzeughalters 3 anliegt. Die Staubkappe 1 ist vorne - bis auf die für den Durchtritt des Werkzeugs 5 oder der Futterbacken 4 vorgesehenen Öffnungen 14, 15 - durch zwei ring- bzw. scheibenförmige Dichtlippen 16, 17 abgeschlossen, die in einem gewissen Abstand A voneinander angeordnet sind. Die Dichtlippen sind im Querschnitt relativ dünn, im Ausführungsbeispiel ca. 1 mm dick und ihre radiale Erstreckung ist deutlich größer als ihre Dicke. Dies macht die Dichtlippen 16, 17 sehr flexibel und anpassungsfähig an verschiedene Bohrerschaftdurchmesser. Der Abstand A ist so bemessen, daß die Dichtlippen 16, 17 sich beim Umbiegen nicht gegenseitig behindern, er ist insbesondere größer als die Dicke der Dichtlippen. Um eine Aufweitung, insbesondere der engeren Durchtrittsöffnung 14, zu erleichtern, ist die Dichtlippe 16 strahlenförmig etwa im Abstand von 60° unter Bildung mehrerer Lappen geschlitzt. Die Durchtrittsöffnung 14 weist einen Durchmesser von 6 mm auf. Wesentlich größer sollte dieser Durchmesser nicht sein, um auch bei Bohrwerkzeugen mit dünnen Schäften eine Abdichtung zu gewährleisten. Der Durchmesser der hinteren größeren Öffnung 15 liegt vorzugsweise bei 9 mm. Die Dichtlippe 17 ist so elastisch, daß sie auch ohne vorgegebene Schlitze sich bis zu einem Durchmesser von etwa 13 mm, was dem größten üblichen Bohrerdurchmesser entspricht, aufweiten läßt.

Zwischen den in einem gewissen Abstand voneinander angeordneten Dichtlippen 16, 17 sind radial nach außen führende Entstaubungsbohrungen 19 angeordnet, durch die etwa eindringender Staub durch während des Bohrbetriebs auftretende Fliehkraft wieder aus der Staubkappe 1 herausgefördert wird. Zwischen der hinteren Dichtlippe 15 und dem Kragen 9 können weitere Entstaubungsbohrungen 20 angeordnet sein. Innerhalb der Staubkappe 1 ist vor den Entstaubungsbohrungen 20 ein Staubsammelraum 21 gebildet, der maschinenseitig von dem Grundkörper 2 und den Futterbacken 4 begrenzt wird. An der Stirnseite 12 ist ein Anlaufwulst 22 gebildet, der unter anderem die Staubkappe 1 beim Anstoßen an ein Werkstück oder an eine Mauerwand vor Beschädigung schützen soll. Er ist einstückig mit der Staubkappe 1 und ebenfalls gummielastisch.

Die beiden unterschiedlich langen Dichtlippen 16 und 17 gewährleisten, insbesondere bei einem speziellen Werkzeughalter, in dem sowohl Werkzeuge mit Normschaft- als auch Rundschaftbohrer verschiedenen Schaftdurchmessers gespannt werden können, eine gute Abdichtung in jedem Anwendungsfall. Dies zeigen insbesondere die Figuren 1 und 3 bis 6. Bei relativ weit aus dem Grundkörper 2 hervorstehenden Futterbacken 4 (vgl. Figur 1) liegen beide Dichtlippen außen an den Futterbacken 4 an. In Figur 3 ist ein Rundschaftbohrer 5 mit kleinerem Schaftdurchmesser gezeigt, bei dem die Dichtlippe 16 direkt am Bohrerschaft abdichtet und die Dichtlippe 15 an den Futterbacken 4 anliegt.

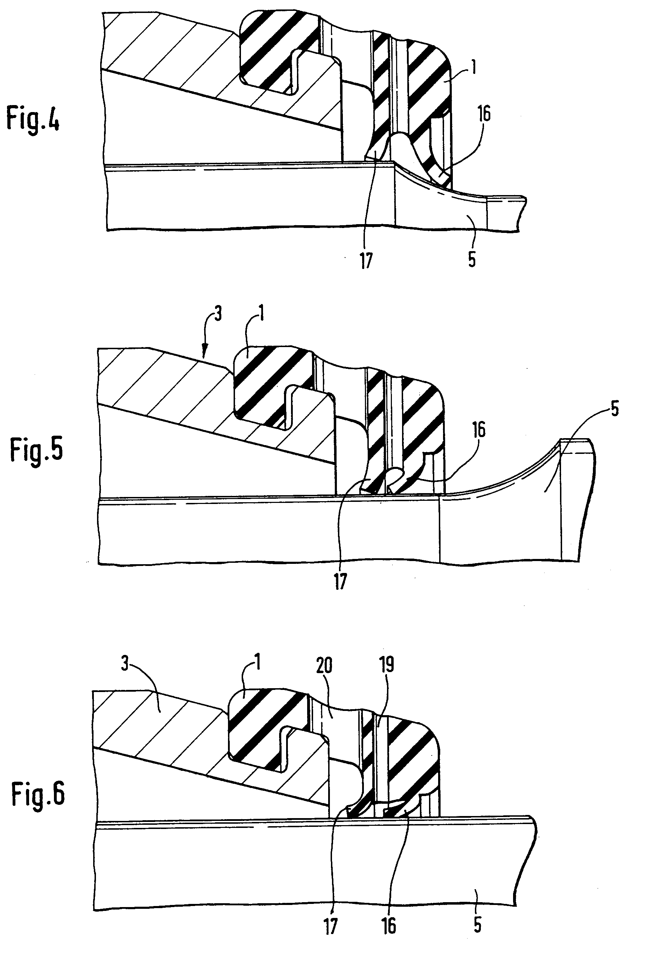

In Figur 4 ist ein Werkzeug 5 mit zur Bohrerspitze hin sich einschnürendem Schaft gezeigt. Auch ein solches Werkzeug ist mit Hilfe der unterschiedlich langen Dichtlippen 16 und 17 gut abdichtbar. In Figur 5 ist ein Bohrwerkzeug mit relativ großem Schaftdurchmesser gezeigt. Auch hier legen sich die Dichtlippen 16 und 17 direkt an den Schaft an. Die Beispiele zeigen, daß sich die Lappen der äußeren Dichtlippe 16 je nach Werkzeug entweder nach innen oder nach außen abbiegen, um eine optimale Dichtwirkung zu erzielen.

In Figur 6 ist die Abdichtung eines Bohrwerkzeugs mit sehr großem Durchmesser, z. B. 13 mm gezeigt. Hier biegen sich die Dichtlippen 16, 17 beim Einführen des Werkzeugs nach hinten in Richtung auf den Werkzeughalter 3 und legen sich dichtend an den Bohrerschaft an.

In allen Anwendungsfällen ist eine doppelte Dichtwirkung durch beide Dichtlippen 16, 17 gegeben. Dies wird insbesondere dadurch erreicht, daß die vordere äußere Dichtlippe 16 länger ist als die innere Dichtlippe 17. Auch die Durchlässigkeit der Entstaubungsbohrungen 19, 20 bleibt in den verschiedenen Anwendungsfällen erhalten. Der Staubaustrag von ggf. doch in den Raum insbesondere zwischen den beiden Dichtlippen 16, 17 eingedrungenem Staubes kann dadurch begünstigt werden, daß der davorliegende Staubsammelraum bzw. die Entstaubungsbohrung selbst beim Anlaufen der Staubkappe 1 an eine zu bearbeitende Fläche komprimiert wird. Der Anlaufwulst 22 übt dabei einen Druck auf die Hohlräume innerhalb der Staubkappe 1 aus.

## Patentansprüche

1. Staubkappe für Bohrgeräte, insbesondere solche mit Mehrbackenfutter, die den Spalt zwischen Werkzeughalter (3) und Werkzeug (5) gegen Eindringen von Bohrmehl abdichtet mittels mindestens zweier elastischer Dichtlippen (16, 17), die an dem Werkzeug (5) anliegen, dadurch gekennzeichnet, daß die Dichtlippen (16, 17) eine radiale Erstreckung aufweisen, die ein Mehrfaches ihrer Dicke beträgt und daß zwei ringförmige Dichtlippen (16, 17) unterschiedlich weit radial nach innen ragen.

2. Staubkappe nach Anspruch 1, dadurch gekennzeichnet, daß die Dichtlippen (16, 17) axial einen gewissen Abstand A voneinander haben.

3. Staubkappe nach Anspruch 1 oder 2, dadurch gekennzeichnet, daß mindestens eine der Dichtlippen (16, 17) in entspanntem Zustand einen Innendurchmesser von höchstens 8 mm, vorzugsweise 5 bis 6 mm, aufweist.

4. Staubkappe nach einem der vorhergehenden Ansprüche, dadurch gekennzeichnet, daß sie in ihrer Seitenwand (7) innerhalb des von den Dichtlippen (16, 17) abgeschlossenen Bereichs eine oder mehrere insbesondere radial nach außen führende Entstaubungsbohrungen (20) aufweist.

5. Staubkappe nach Anspruch 4, dadurch gekennzeichnet, daß zwischen den Dichtlippen (16, 17) radial nach außen führende Entstaubungsbohrungen (19) vorgesehen sind.

6. Staubkappe nach einem der vorhergehenden Ansprüche zur Verwendung mit einem einen Grundkörper (2) und daraus hervortretende Futterbacken (4) aufweisenden Backenfutter, dadurch gekennzeichnet, daß bei aus dem Grundkörper (2) herausragenden Futterbacken (4) mindestens eine der Dichtlippen (16, 17) an den Futterbacken (4) anliegt, wenn diese aus dem Bohrfutterkörper (2) herausragen.

7. Staubkappe nach einem der vorhergehenden Ansprüche, dadurch gekennzeichnet, daß innerhalb der Kappe (1) vor den Entstaubungsbohrungen (19) ein Staubsammelraum (21) ausgebildet ist.

8. Staubkappe nach einem der vorhergehenden Ansprüche, dadurch gekennzeichnet, daß sie einen nach innen vorstehenden Kragen (9) zur Befestigung an dem Werkzeughalter (3) des Bohrgerätes aufweist.

9. Staubkappe nach einem der vorhergehenden Ansprüche, dadurch gekennzeichnet, daß sie an ihrem dem Bohrwerkzeug abgewandten Ende einen Anlaufwulst (22) aufweist, der an ein Werkstück anpressbar ist und dabei eine Kompression des Staubsammelraums (21) hervorruft.

## Claims

1. Dust cap for drilling machines, in particular those having multi-jaw chucks, which seals off the gap between tool holder (3) and tool (5) against the penetration of drillings by means of at least two elastic sealing lips (16, 17) which bear against the tool (5), characterized in that the sealing lips (16, 17) have a radial extent which is a multiple of their thickness and in that two annular sealing lips (16, 17) project radially inwards by different distances.

2. Dust cap according to Claim 1, characterized in that the sealing lips (16, 17) are at a certain axial distance A from one another.

3. Dust cap according to Claim 1 or 2, characterized in that at least one of the sealing lips (16, 17) has an inside diameter of at most 8 mm, preferably 5 to 6 mm, in the relaxed state.

4. Dust cap according to one of the preceding claims, characterized in that it has one or more dust-exhaust bores (20), in particular leading radially outwards, in its side wall (7) inside the area closed off by the sealing lips (16, 17).

5. Dust cap according to Claim 4, characterized in that dust-exhaust bores (19) leading radially outwards are provided between the sealing lips (16, 17).

6. Dust cap according to one of the preceding claims for use with a jaw chuck having a basic body (2) and chuck jaws (4) projecting therefrom, characterized in that, in the case of chuck jaws (4) projecting from the basic body (2), at least one of the sealing lips (16, 17) bears against the chuck jaws (4) when the latter project from the drill chuck body (2).

7. Dust cap according to one of the preceding claims, characterized in that a dust-collecting space (21) is formed inside the cap (1) in front of the dust-exhaust bores (19).

8. Dust cap according to one of the preceding claims, characterized in that it has an inwardly projecting collar (9) for fastening to the tool holder (3) of the drilling machine.

9. Dust cap according to one of the preceding claims, characterized in that it has a check bead (22) at its end remote from the drilling tool, which check bead (22) can be pressed against a workpiece and in the process compresses the dust-collecting space (21).

## Revendications

1. Capuchon à poussière pour perceuse notamment à mandrin à plusieurs mors, protégeant contre la pénétration de farine de perçage, l'intervalle compris entre le porte-outil (3) et l'outil (5), à l'aide d'au moins deux lèvres d'étanchéité (16, 17) élastiques, s'appuyant contre l'outil (5), caractérisé en ce que les lèvres d'étanchéité (16, 17) présentent une extension radiale correspondant à un multiple de leur épaisseur et en ce que deux lèvres d'étanchéité (16, 17) de forme annulaire, viennent radialement en saillie vers l'intérieur sur des longueurs différentes.

2. Capuchon à poussière selon la revendication 1, caractérisé en ce que les lèvres d'étanchéité (16, 17) ont entre elles un certain intervalle axial (A).

3. Capuchon à poussière selon la revendication 1 ou 2, caractérisé en ce qu'au moins l'une des lèvres d'étanchéité (16, 17) présente à l'état détendu, un diamètre intérieur au moins égal à 8 mm et de préférence compris entre 5 et 6 mm.

4. Capuchon à poussière selon l'une des revendications précédentes, caractérisé en ce qu'il comporte dans sa paroi latérale (7), dans la zone délimitée par les lèvres d'étanchéité (16, 17), un ou plusieurs perçages d'évacuation de la poussière (20), dirigés radialement vers l'extérieur.

5. Capuchon à poussière selon la revendication 4, caractérisé par des perçages d'évacuation de poussière (19) dirigés radialement vers l'extérieur entre les lèvres d'étanchéité (16, 17).

6. Capuchon à poussière selon l'une des revendications précédentes, appliqué à un mandrin ayant un corps de base (2) dont viennent en saillie des mandrins (4), caractérisé en ce que lorsque les mors (4) du mandrin sont en saillie du corps de base (2), au moins l'une des lèvres d'étanchéité (16, 17) s'appuie contre les mors de mandrin (4), lorsque ces mors sortent du corps de mandrin (2).

7. Capuchon à poussière selon l'une des revendications précédentes, caractérisé en ce qu'à l'intérieur du capuchon (1), en amont des perçages d'évacuation de poussière (19), il y a une chambre collectrice de poussière (21).

8. Capuchon à poussière selon l'une des revendications précédentes, caractérisé en ce qu'il comporte une collerette (9) en saillie vers l'intérieur pour sa fixation au porte-outil (3) de la perceuse.

9. Capuchon à poussière selon l'une des revendications précédentes, caractérisé en ce qu'à son extrémité opposée à l'outil de perçage, il comporte un bourrelet d'attaque (22) qui peut être comprimé contre une pièce et provoquer ainsi la compression de la chambre collectrice de poussière (21).
